# EUROPEAN PATENT APPLICATION

(11) **EP 4 832 085 A1**
(43) Date of publication of application: **28.10.2026**
(21) Application number: 24908038.3
(22) Date of filing: 17.12.2024
(51) Int. Cl.: H01M 4/36, C01G 53/00, H01M 4/525, H01M 4/505, H01M 4/131, H01M 10/052, H01M 4/02

(54) **CATHODE ACTIVE MATERIAL FOR LITHIUM SECONDARY BATTERY, MANUFACTURING METHOD OF SAME, AND LITHIUM SECONDARY BATTERY COMPRISING SAME**

(30) Priority: 18.12.2023 KR 20230184348
(71) Applicant: POSCO Holdings Inc., Pohang-si, Gyeongsangbuk-do 37859 (KR)
(72) Inventor: PARK, Jung Woo, Pohang-si, Gyeongsangbuk-do 37859 (KR); SONG, Junghoon, Pohang-si, Gyeongsangbuk-do 37859 (KR); LEE, Taek Gyu, Pohang-si, Gyeongsangbuk-do 37859 (KR); HWANGBO, Geun, Pohang-si, Gyeongsangbuk-do 37859 (KR); LEE, Jaeeun, Pohang-si, Gyeongsangbuk-do 37859 (KR); LEE, Dong Jae, Pohang-si, Gyeongsangbuk-do 37859 (KR); KIM, Chang Min, Pohang-si, Gyeongsangbuk-do 37859 (KR)
(74) Representative: Pfenning, Meinig & Partner mbB
(86) International application number: PCT/KR2024/020546
(87) International publication number: WO 2025/135755

(57) **Abstract**

The present invention relates to a positive electrode active material for a lithium secondary battery, including lithium metal oxide particles having a nickel (Ni)-containing layered crystal structure; and a coating layer surrounding an entire surface of the lithium metal oxide particles and containing an aluminum (Al) compound, wherein the aluminum compound includes LiAlO₂ and AlPO₄, and the content of LiAlO₂ is 13 to 31 wt% based on the total weight of LiAlO₂ and AlPO₄.

## Description

### [TECHNICAL FIELD]

The present invention relates to a positive electrode active material for a lithium secondary battery, a method for manufacturing the same, and a lithium secondary battery including the same.

### [BACKGROUND ART]

As positive electrode active materials for lithium secondary batteries, lithium cobalt oxide (LiCoO₂), lithium nickel oxide (LiNiO₂), lithium manganese oxide (LiMnO₂ or LiMnO₄, or the like), lithium iron phosphate compounds (LiFePO₄), and the like have been used. Among these, lithium cobalt oxide has advantages in that it has a high operating voltage and excellent capacity characteristics, but cobalt, which is a raw material thereof, is expensive and has unstable supply, and thus it is difficult to commercially apply lithium cobalt oxide to large-capacity batteries. Lithium nickel oxide has low structural stability and thus it is difficult to implement sufficient lifespan characteristics. Meanwhile, lithium manganese oxide has excellent stability but has a problem in that capacity characteristics are poor. Accordingly, lithium composite transition metal oxides including two or more transition metals have been developed so as to compensate for problems of lithium transition metal oxides including Ni, Co, or Mn alone, and among these, lithium nickel cobalt manganese oxide including Ni, Co, and Mn is widely used in the field of electric vehicle batteries.

In addition, recently, demand for high-output and high-capacity batteries, such as batteries for electric vehicles, has increased, and accordingly, the nickel content in a positive electrode active material is gradually increasing, that is, a so-called "high-nickel" trend is occurring. When the nickel content in the positive electrode active material increases, initial capacity characteristics are improved, but when charging and discharging are repeated, a large amount of highly reactive Ni⁴⁺ ions is generated, structural collapse of the positive electrode active material occurs, and thus the deterioration rate of the positive electrode active material increases, thereby causing a problem that lifespan characteristics are deteriorated.

Meanwhile, a high-nickel-based positive electrode material has a high content of residual lithium (LiOH and/or Li₂CO₃) remaining on the surface after manufacture of the positive electrode material, and thus, in order to remove residual lithium that impairs safety of a battery, a water-washing process is generally performed. However, the water-washing process damages the surface structure of the positive electrode material, increases the possibility of proton exchange, impairs electrochemical characteristics such as capacity and output of the positive electrode material, increases manufacturing costs of the positive electrode material, and generates wastewater, thereby causing a problem that a separate wastewater treatment facility is required.

### [DETAILED DESCRIPTION OF THE INVENTION]

### [Technical Problem]

Accordingly, an object of the present invention is to provide a positive electrode active material for a lithium secondary battery, in which lifespan characteristics are improved, residual lithium is reduced, and capacity (initial discharge capacity) characteristics can be excellently implemented by coating a coating layer on a surface of a lithium metal oxide, a method for manufacturing the same, and a lithium secondary battery including the same.

### [Technical Solution]

One embodiment of the present invention provides a positive electrode active material for a lithium secondary battery, the positive electrode active material including: lithium metal oxide particles having a nickel (Ni)-containing layered crystal structure; and a coating layer surrounding an entire surface of the lithium metal oxide particles and containing an aluminum (Al) compound, wherein the aluminum compound includes LiAlO₂ and AlPO₄, and the content of LiAlO₂ is 13 to 31 wt% based on the total weight of LiAlO₂ and AlPO₄.

The average thickness of the coating layer may be 0.15 to 1.3 nm.

An average of difference values between a maximum thickness and a minimum thickness of the coating layer may be 0.5 nm or less.

The content of an aluminum element in the positive electrode active material may be 400 to 2150 ppm based on the total weight of the positive electrode active material.

The content of a phosphorus element in the positive electrode active material may be 300 to 1000 ppm based on the total weight of the positive electrode active material.

The LiAlO₂ may be amorphous.

The AlPO₄ may be amorphous.

The positive electrode active material may have a residual lithium content of 8000 ppm or less.

The content of nickel in the lithium metal oxide may be 80 mol% or more based on the total number of moles of metals excluding lithium.

The lithium metal oxide may be represented by the following Chemical Formula 1.

[Chemical Formula 1] Liₐ[NiₓCo_{y}Mn_{z}M_{w}]O₂

In Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

Another embodiment of the present invention provides a method for manufacturing a positive electrode active material for a lithium secondary battery, the method including: preparing a lithium metal oxide having a nickel (Ni)-containing layered crystal structure; and forming a coating layer containing an aluminum compound on the lithium metal oxide by an atomic layer deposition method, wherein a water-washing process is not performed after the preparing of the lithium metal oxide and before the forming of the coating layer, the aluminum compound includes LiAlO₂ and AlPO₄, and the content of LiAlO₂ is 13 to 31 wt% based on the total weight of LiAlO₂ and AlPO₄.

The atomic layer deposition may be performed in 1 to 3 cycles.

One cycle of the atomic layer deposition may include supplying an aluminum-containing gas and a phosphorus-containing gas onto the lithium metal oxide to adsorb the aluminum-containing gas and the phosphorus-containing gas onto the lithium metal oxide; and supplying and reacting a reactant onto the lithium metal oxide onto which the aluminum-containing gas and the phosphorus-containing gas are adsorbed.

The supply amount of the aluminum-containing gas may be 0.2 to 2.0 wt% based on the total weight of the lithium metal oxide.

The supply amount of the phosphorus-containing gas may be 0.2 to 1.6 wt% based on the total weight of the lithium metal oxide.

The supply amount of the reactant may be 0.002 to 0.02 wt% based on the total weight of the lithium metal oxide.

The atomic layer deposition may be performed at a temperature of 200 to 300°C.

The atomic layer deposition may be performed at a pressure of 1 to 10 torr.

Still another embodiment of the present invention provides a positive electrode for a lithium secondary battery including the above-described positive electrode active material.

Still another embodiment of the present invention provides a lithium secondary battery including the positive electrode for a lithium secondary battery.

### [Advantageous Effects]

In the positive electrode active material for a lithium secondary battery according to one embodiment of the present invention, since a very thin and homogeneous coating layer is coated without a separate water-washing process after a calcination process, lifespan characteristics can be improved, residual lithium can be reduced, and capacity (initial discharge capacity) characteristics can be excellently implemented.

In addition, in the positive electrode active material for a lithium secondary battery according to one embodiment of the present invention, residual lithium can be reduced without a water-washing process, and thus there is no problem of wastewater treatment of a water-washing solution, thereby reducing process costs.

### [BRIEF DESCRIPTION OF THE DRAWINGS]

FIG. 1 is an EDS (Energy Dispersive Spectroscopy) mapping image for a TEM image of a particle surface after FIB (Focused Ion Beam) milling of a positive electrode active material manufactured according to Example 2.
FIG. 2 is an EDS (Energy Dispersive Spectroscopy) mapping image for a nickel element in FIG. 1.
FIG. 3 is an EDS (Energy Dispersive Spectroscopy) mapping image for a cobalt element in FIG. 1.
FIG. 4 is an EDS (Energy Dispersive Spectroscopy) mapping image for a manganese element in FIG. 1.
FIG. 5 is an EDS (Energy Dispersive Spectroscopy) mapping image for an aluminum element in FIG. 1.
FIG. 6 is an EDS (Energy Dispersive Spectroscopy) mapping image for a phosphorus element in FIG. 1.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the phrases clearly indicate the contrary. As used in the specification, the meaning of "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless specifically stated otherwise, % means wt%, and 1 ppm is 0.0001 wt%.

In the present specification, the term "combination(s) thereof" described in a Markush-type expression means a mixture or combination of one or more selected from the group consisting of the components described in the Markush-type expression, and means including at least one selected from the group consisting of the components.

Hereinafter, embodiments of the present invention will be described in detail so that a person having ordinary skill in the art to which the present invention pertains can easily practice the present invention. However, the present invention may be implemented in various different forms and is not limited to the embodiments described herein.

### 1. Positive Electrode Active Material

The positive electrode active material for a lithium secondary battery according to one embodiment of the present invention includes lithium metal oxide particles having a nickel (Ni)-containing layered crystal structure. More specifically, the lithium metal oxide may further include cobalt or manganese in addition to nickel, and may further include other doping elements.

The lithium metal oxide particles may be secondary particles formed by aggregation of a plurality of primary particles. In the present specification, "secondary particle" means an aggregate, that is, a secondary structure, in which tens to hundreds of primary particles are aggregated by physical or chemical bonding between primary particles even without an intentional aggregation or granulation process for the primary particles.

In addition, "primary particle" means a minimum particle unit distinguished as one lump when a cross-section of a positive electrode active material is observed through a scanning electron microscope (SEM), and may be composed of one crystal grain or a plurality of crystal grains. In addition, "crystal grain" means a distinguishable region in a primary particle in which atoms form a lattice structure in a certain direction.

The content of nickel in the lithium metal oxide may be 80 mol% or more based on the total number of moles of metals excluding lithium, and more specifically may be 85 mol% or more. Since the lithium metal oxide includes such a high content of nickel, that is, so-called "high nickel," high capacity of a battery can be achieved.

However, when the nickel content in the positive electrode active material increases, initial capacity characteristics are improved, but when charging and discharging are repeated, a large amount of highly reactive Ni⁴⁺ ions is generated, structural collapse of the positive electrode active material occurs, and thus the deterioration rate of the positive electrode active material increases, thereby causing a problem that lifespan characteristics are deteriorated.

Meanwhile, a high-nickel-based positive electrode material has a high content of residual lithium (LiOH and/or Li₂CO₃) remaining on the surface after manufacture of the positive electrode material, and thus, in order to remove residual lithium that impairs safety of a battery, a water-washing process is generally performed. However, the water-washing process damages the surface structure of the positive electrode material, increases the possibility of proton exchange, impairs electrochemical characteristics such as capacity and output of the positive electrode material, increases manufacturing costs of the positive electrode material, and generates wastewater, thereby causing a problem that a separate wastewater treatment facility is required.

Accordingly, the present inventors studied a coating method capable of reducing residual lithium of a positive electrode active material without a water-washing process, improving lifespan, and excellently implementing capacity. As a result, the present inventors found that, after manufacturing a lithium metal oxide, when aluminum is coated by an atomic layer deposition process without a separate water-washing process while appropriately controlling other overall coating processes, residual lithium of the positive electrode active material can be reduced, lifespan can be improved, and capacity characteristics can be excellently implemented, thereby completing the present invention.

More specifically, the positive electrode active material for a lithium secondary battery according to one embodiment of the present invention includes a coating layer surrounding an entire surface of the lithium metal oxide and containing an aluminum (Al) compound. That is, the coating layer is a conformal-type coating layer uniformly surrounding the entire surface of the lithium metal oxide particles, and the thickness thereof is very thin and uniform. Accordingly, compared with an island-type coating layer, an effect of improving structural stability of the positive electrode active material and an effect of reducing residual lithium can be more favorably implemented, and as a result, effects of improving lifespan and safety of the positive electrode active material can be preferably implemented. Meanwhile, a conformal-type coating layer having a very thin and uniform thickness can be implemented by performing coating by an atomic layer deposition process.

At this time, the aluminum compound includes LiAlO₂ and AlPO₄, and the content of LiAlO₂ is 13 to 31 wt% based on the total weight of LiAlO₂ and AlPO₄, and more specifically may be 14 to 29 wt%. When the content of LiAlO₂ satisfies the above range, capacity and lifespan characteristics of the positive electrode active material can be simultaneously preferably implemented. Specifically, the content of LiAlO₂ in the above range may be a larger content than in a case in which a coating process is performed after performing a water-washing process after manufacture of the lithium metal oxide. As mentioned above, in the positive electrode active material according to the present invention, an aluminum coating process is immediately performed after manufacture of the lithium metal oxide without a separate water-washing process. At this time, compared with a case in which a water-washing process is performed, when the water-washing process is not performed, a large amount of residual lithium (LiOH and/or Li₂CO₃) remaining on the surface of the lithium metal oxide and an aluminum raw material actively participate in the coating reaction, and thus the content of LiAlO₂ can be obtained as large as in the above range. As a result, the effect of increasing the content of LiAlO₂, which has relatively better electrochemical activity than AlPO₄, and the effect of not performing the water-washing process act in combination, so that the positive electrode active material according to the present invention can preferably implement capacity and lifespan characteristics.

The content of LiAlO₂ in the above range can be more easily obtained by controlling non-performance of a water-washing process, the number of cycles performed in the atomic layer deposition process, the performing temperature during the atomic layer deposition process, the supply amount of the aluminum-containing gas per cycle, the supply amount of the phosphorus-containing gas per cycle, the supply amount of the reactant per cycle, and the like. This will be described in more detail in the method for manufacturing a positive electrode active material described below.

Meanwhile, the weight ratio of LiAlO₂ relative to the total weight of LiAlO₂ and AlPO₄ in the coating layer can be confirmed through X-ray Photoelectron Spectroscopy (XPS) analysis of the surface of the positive electrode active material.

In addition, the average thickness of the coating layer may be 0.15 to 1.3 nm, and more specifically may be 0.2 to 1.1 nm. When the average thickness of the coating layer is too thin, the coating-layer coating effect may become insignificant, and the effect of improving lifespan characteristics of the positive electrode active material may be insignificant. When the average thickness of the coating layer is too large, the coating layer acts as a resistor, and capacity and lifespan characteristics of the positive electrode active material may rather deteriorate.

The average thickness of the coating layer in the above range can be more easily obtained by controlling the number of cycles performed in the atomic layer deposition process, the performing temperature during the atomic layer deposition process, the supply amount of the aluminum-containing gas per cycle, the supply amount of the phosphorus-containing gas per cycle, the supply amount of the reactant per cycle, and the like. This will be described in more detail in the method for manufacturing a positive electrode active material described below.

In addition, the average thickness of the coating layer may be measured by the following method. First, the thickness of the coating layer for one positive electrode active material particle may be calculated by analyzing a cross-sectional TEM image after FIB (Focused Ion Beam) milling of the positive electrode active material particle, randomly selecting 10 positions among surface portions of the positive electrode active material particle, and obtaining an average value of coating layer thicknesses at the selected positions. Next, the average thickness of the coating layer may be calculated by obtaining an average of coating layer thicknesses measured in the same manner as described above for 20 arbitrary positive electrode active material particles among the positive electrode active material powder.

In addition, the average of difference values between a maximum thickness and a minimum thickness of the coating layer may be 0.5 nm or less, and more specifically may be 0.4 nm or less. That is, since the coating layer according to the present invention is manufactured through an atomic layer deposition-type coating process, the thickness uniformity of the coating layer can be improved. Accordingly, resistance of the coating layer can be reduced, and the effect of improving capacity and lifespan characteristics of the positive electrode active material can be more preferably implemented.

Meanwhile, the average of difference values between a maximum thickness and a minimum thickness of the coating layer in the above range can be more easily obtained by controlling the number of cycles performed in the atomic layer deposition process, the performing temperature during the atomic layer deposition process, the supply amount of the aluminum-containing gas per cycle, the supply amount of the phosphorus-containing gas per cycle, the supply amount of the reactant per cycle, and the like. This will be described in more detail in the method for manufacturing a positive electrode active material described below.

In addition, the average of difference values between a maximum thickness and a minimum thickness of the coating layer may be measured by the following method. First, a difference value between a maximum thickness and a minimum thickness for one positive electrode active material particle may be calculated by analyzing a cross-sectional TEM image after FIB (Focused Ion Beam) milling of the positive electrode active material particle, calculating the maximum thickness and the minimum thickness among the entire coating layer surrounding the active material particle, and obtaining a difference value therebetween. Next, the average of the difference values between the maximum thicknesses and the minimum thicknesses of the coating layer may be calculated by obtaining an average of coating layer thicknesses measured in the same manner as described above for 20 arbitrary positive electrode active material particles among the positive electrode active material powder.

In addition, the content of an aluminum element in the positive electrode active material may be 400 to 2150 ppm based on the total weight of the positive electrode active material, and more specifically may be 500 to 2100 ppm. When the content of the aluminum element in the positive electrode active material satisfies the above range, an appropriate amount of aluminum can be coated, and thus residual lithium reduction, capacity, and lifespan characteristics of the positive electrode active material can be more preferably implemented.

Meanwhile, the content of the aluminum element in the above range can be more easily obtained by controlling the number of cycles performed in the atomic layer deposition process, the performing temperature during the atomic layer deposition process, the supply amount of the aluminum-containing gas per cycle, the supply amount of the phosphorus-containing gas per cycle, the supply amount of the reactant per cycle, and the like. This will be described in more detail in the method for manufacturing a positive electrode active material described below.

In addition, in the present specification, the content of the aluminum element in the positive electrode active material may be measured through ICP (inductively coupled plasma spectroscopy) component analysis.

In addition, the content of a phosphorus element in the positive electrode active material may be 300 to 1000 ppm based on the total weight of the positive electrode active material, and more specifically may be 340 to 930 ppm. When the content of the phosphorus element in the positive electrode active material satisfies the above range, an appropriate amount of phosphorus can be coated, and thus residual lithium reduction, capacity, and lifespan characteristics of the positive electrode active material can be more preferably implemented.

Meanwhile, the content of the phosphorus element in the above range can be more easily obtained by controlling the number of cycles performed in the atomic layer deposition process, the performing temperature during the atomic layer deposition process, the supply amount of the aluminum-containing gas per cycle, the supply amount of the phosphorus-containing gas per cycle, the supply amount of the reactant per cycle, and the like. This will be described in more detail in the method for manufacturing a positive electrode active material described below.

In addition, in the present specification, the content of the phosphorus element in the positive electrode active material may be measured through ICP (inductively coupled plasma spectroscopy) component analysis.

In addition, the LiAlO₂ may be amorphous, and the AlPO₄ may be amorphous. Since LiAlO₂ and AlPO₄, which are aluminum compounds in the coating layer, are amorphous, lithium ion mobility can be improved, and capacity and output characteristics of the positive electrode active material can be more preferably implemented.

Amorphicity of the aluminum compound may be confirmed by TEM (transmission electron microscope) image analysis or X-ray diffraction pattern analysis with respect to the positive electrode active material.

In addition, as described above, the positive electrode active material according to the present invention may have a residual lithium content of 8000 ppm or less, and more specifically 7600 ppm or less, by coating the coating layer instead of a water-washing process. Accordingly, gas generation and battery swelling caused by side reactions between residual lithium and an electrolyte solution can be suppressed, and safety of the battery can be improved.

The lithium metal oxide may be represented by the following Chemical Formula 1.

[Chemical Formula 1] Liₐ[NiₓCo_{y}Mn_{z}M_{w}]O₂

In Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

In the lithium metal oxide of Chemical Formula 1, lithium may be included in a content corresponding to a, that is, 0.8≤a≤1.3. When a is too small, capacity may be reduced. When a is too large, the strength of the calcined positive electrode active material increases, so pulverization may be difficult, and gas generation may increase due to an increase in lithium by-products. Considering an effect of improving capacity characteristics of the positive electrode active material according to control of the lithium content and a balance of sinterability during manufacture of the active material, the lithium may more preferably be included in a content of 0.9≤a≤1.1.

In the lithium metal oxide of Chemical Formula 1, nickel may be included in a content corresponding to x, that is, 0.8≤x<1. When the content of nickel satisfies the above range, high capacity of a battery can be achieved.

In the lithium metal oxide of Chemical Formula 1, cobalt may be included in a content corresponding to y, that is, 0≤y≤0.2. When the cobalt content is too small, growth of crystal grain size may be inhibited, and output characteristics may be reduced. When the cobalt content is too large, manufacturing costs may increase and reversible capacity may decrease.

In the lithium metal oxide of Chemical Formula 1, manganese may be included in a content corresponding to z, that is, 0≤z≤0.2. When the manganese content is too small, production costs may increase and active material stability may decrease. When the manganese content is too large, capacity and output characteristics of the battery may decrease.

In the lithium metal oxide of Chemical Formula 1, M, which is another doping element, may be included in a content corresponding to w, that is, 0≤w1≤0.2. At this time, M may be Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof. The content of the other doping element may be appropriately selected to implement the other doping effect.

### 2. Method for Manufacturing Positive Electrode Active Material

Another embodiment of the present invention provides a method for manufacturing a positive electrode active material for a lithium secondary battery, the method including: preparing a lithium metal oxide having a nickel (Ni)-containing layered crystal structure; and forming a coating layer containing an aluminum compound on the lithium metal oxide by an atomic layer deposition method, wherein a water-washing process is not performed after the preparing of the lithium metal oxide and before the forming of the coating layer, the aluminum compound includes LiAlO₂ and AlPO₄, and the content of LiAlO₂ is 13 to 31 wt% based on the total weight of LiAlO₂ and AlPO₄.

Hereinafter, the method for manufacturing a positive electrode active material for a lithium secondary battery according to another embodiment of the present invention will be described in detail step by step.

First, a lithium metal oxide having a nickel (Ni)-containing layered crystal structure is prepared.

More specifically, the lithium metal oxide may be prepared by preparing a metal precursor and then mixing and calcining the metal precursor and a lithium raw material.

The metal precursor may more specifically be a metal hydroxide.

The metal precursor may be manufactured, for example, by adding a complexing-agent-containing solution and a pH-adjusting-agent-containing solution to a metal-containing solution including a nickel raw material, a manganese raw material, or a cobalt raw material, and performing a coprecipitation reaction.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, oxyhydroxide, or the like, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, nickel fatty acid salt, nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, oxyhydroxide, or the like, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, manganese dicarboxylate salt, manganese citrate, manganese salts such as manganese fatty acid salts, manganese oxides such as Mn₂O₃, MnO₂, and Mn₃O₄, oxyhydroxide, manganese chloride, or a combination thereof, but is not limited thereto.

The metal-containing solution may be prepared by adding the nickel raw material, the manganese raw material, or the cobalt raw material to a solvent, specifically water, or a mixture of water and an organic solvent (for example, alcohol or the like) that can be uniformly mixed with water.

The complexing-agent-containing solution performs a role of forming a complex, and may include, for example, NH₃, NH₄OH, (NH₄)₂SO₄, NH₄NO₃, NH₄Cl, CH₃COONH₄, NH₄CO₃, or a combination thereof as the complexing agent, but is not limited thereto. Meanwhile, the complexing-agent-containing solution may be used in the form of an aqueous solution, and at this time, as the solvent, water or a mixture of water and an organic solvent (for example, alcohol or the like) that can be uniformly mixed with water may be used.

The pH-adjusting-agent-containing solution performs a role of a precipitant or pH adjustment, and may include an alkaline compound of a hydroxide of an alkali metal or alkaline earth metal, such as NaOH, KOH, or Ca(OH)₂, a hydrate thereof, or a combination thereof. Meanwhile, the pH-adjusting-agent-containing solution may also be used in the form of an aqueous solution, and at this time, as the solvent, water or a mixture of water and an organic solvent (for example, alcohol or the like) that can be uniformly mixed with water may be used. At this time, the pH-adjusting-agent-containing solution may be added in an amount such that the pH of the reaction solution becomes 10 to 13.

The coprecipitation reaction may be performed under an inert atmosphere such as nitrogen or argon, may be performed at a temperature of 30 to 70°C, and may be performed at a pH of 10 to 13.

Particles of nickel(-or manganese-cobalt) hydroxide are generated by the process described above and precipitated in the reaction solution. The precipitated precursor particles may be separated according to a conventional method, washed with water, and dried to obtain a precursor. The precursor may be secondary particles formed by aggregation of primary particles.

At this time, by controlling concentrations of the nickel raw material, cobalt raw material, or manganese raw material, the molar ratio of nickel, cobalt, or manganese in the precursor can be controlled. That is, the concentrations of the nickel raw material, cobalt raw material, and manganese raw material may be controlled such that the molar ratio of nickel, cobalt, or manganese in the lithium metal oxide, which is a final product, is within the range according to the present invention.

As the lithium raw material, a lithium-containing sulfate, nitrate, acetate, carbonate, oxalate, citrate, halide, hydroxide, oxyhydroxide, or the like may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

In addition, the calcination may be performed at a temperature of 750 to 1000°C. When the calcination temperature is too low, a lithium metal oxide may not be formed. When the calcination temperature is too high, crystal structure defects due to over-calcination may occur, and electrochemical characteristics may deteriorate.

In addition, the calcination may be performed for 5 to 20 hours. When the calcination time is too short, a lithium metal oxide may not be formed. When the calcination time is too long, crystal structure defects due to over-calcination may occur, and electrochemical characteristics may deteriorate.

In addition, the atmosphere during the calcination is not particularly limited, but may be, for example, an oxygen (O₂) or air atmosphere.

At this time, a water-washing process may not be performed after the preparing of the lithium metal oxide and before the forming of the coating layer. The water-washing process is generally performed to remove residual lithium remaining on the surface of the synthesized lithium metal oxide. However, the water-washing process may damage the surface portion structure of the positive electrode active material and reduce electrochemical characteristics such as capacity and output of the positive electrode active material. Accordingly, in the present invention, the coating process described below may replace the effect of reducing residual lithium instead of the water-washing process. Accordingly, the effect of reducing residual lithium and the effect of preserving electrochemical characteristics such as capacity and output of the positive electrode active material can be simultaneously implemented.

Next, a coating layer containing an aluminum compound is formed on the lithium metal oxide by an atomic layer deposition method.

The atomic layer deposition may be performed in 1 to 3 cycles. When the number of atomic layer deposition cycles satisfies the above range, various physical properties of the positive electrode active material, such as the content of LiAlO₂ based on the total weight of LiAlO₂ and AlPO₄ as aluminum compounds in the coating layer, the average thickness of the coating layer, the average of difference values between maximum thicknesses and minimum thicknesses of the coating layer, and the contents of aluminum and phosphorus elements in the positive electrode active material, can be appropriately implemented within the ranges according to the present invention. Accordingly, capacity and lifespan characteristics of the positive electrode active material can be preferably implemented.

More specifically, one cycle of the atomic layer deposition may include: supplying an aluminum-containing gas and a phosphorus-containing gas onto the lithium metal oxide to adsorb the aluminum-containing gas and the phosphorus-containing gas onto the lithium metal oxide; and supplying and reacting a reactant onto the lithium metal oxide onto which the aluminum-containing gas and the phosphorus-containing gas are adsorbed.

At this time, the supply amount of the aluminum-containing gas may be 0.2 to 2.0 wt%, and more specifically 0.6 to 1.4 wt%, based on the total weight of the lithium metal oxide. When the supply amount of the aluminum-containing gas satisfies the above range, aluminum coating can be appropriately performed in units of atomic layer thickness per cycle. Accordingly, various physical properties of the positive electrode active material, such as the content of LiAlO₂ based on the total weight of LiAlO₂ and AlPO₄ as aluminum compounds in the coating layer, the average thickness of the coating layer, and the average of difference values between maximum thicknesses and minimum thicknesses of the coating layer, can be appropriately implemented within the ranges according to the present invention. In addition, capacity and lifespan characteristics of the positive electrode active material can be preferably implemented.

In addition, the supply amount of the phosphorus-containing gas may be 0.2 to 1.6 wt%, and more specifically 0.3 to 0.7 wt%, based on the total weight of the lithium metal oxide. When the supply amount of the phosphorus-containing gas satisfies the above range, aluminum coating can be appropriately performed in units of atomic layer thickness per cycle. Accordingly, various physical properties of the positive electrode active material, such as the content of LiAlO₂ based on the total weight of LiAlO₂ and AlPO₄ as aluminum compounds in the coating layer, the average thickness of the coating layer, and the average of difference values between maximum thicknesses and minimum thicknesses of the coating layer, can be appropriately implemented within the ranges according to the present invention. In addition, capacity and lifespan characteristics of the positive electrode active material can be preferably implemented.

In addition, the supply amount of the reactant may be 0.002 to 0.02 wt%, and more specifically 0.003 to 0.01 wt%, based on the total weight of the lithium metal oxide. When the supply amount of the reactant satisfies the above range, aluminum coating can be appropriately performed in units of atomic layer thickness per cycle. Accordingly, various physical properties of the positive electrode active material, such as the content of LiAlO₂ based on the total weight of LiAlO₂ and AlPO₄ as aluminum compounds in the coating layer, the average thickness of the coating layer, and the average of difference values between maximum thicknesses and minimum thicknesses of the coating layer, can be appropriately implemented within the ranges according to the present invention. In addition, capacity and lifespan characteristics of the positive electrode active material can be preferably implemented.

The aluminum-containing gas may be, for example, AlCl₃.

The phosphorus-containing gas may be, for example, P₂O₅.

The reactant may be, for example, water (H₂O) or ozone (O₃).

The atomic layer deposition may be performed at a temperature of 200 to 300°C, and more specifically at a temperature of 220 to 280°C. When the temperature for performing the atomic layer deposition satisfies the above range, the aluminum-containing gas, the phosphorus-containing gas, and the reactant can smoothly react, and an aluminum coating layer can be easily formed. Accordingly, various physical properties of the positive electrode active material, such as the content of LiAlO₂ based on the total weight of LiAlO₂ and AlPO₄ as aluminum compounds in the coating layer, the average thickness of the coating layer, and the average of difference values between maximum thicknesses and minimum thicknesses of the coating layer, can be appropriately implemented within the ranges according to the present invention. In addition, capacity and lifespan characteristics of the positive electrode active material can be preferably implemented.

The atomic layer deposition may be performed at a pressure of 1 to 10 torr. When the pressure for performing the atomic layer deposition satisfies the above range, the aluminum-containing gas, the phosphorus-containing gas, and the reactant can smoothly react, and an aluminum coating layer can be easily formed. Accordingly, various physical properties of the positive electrode active material, such as the content of LiAlO₂ based on the total weight of LiAlO₂ and AlPO₄ as aluminum compounds in the coating layer, the average thickness of the coating layer, and the average of difference values between maximum thicknesses and minimum thicknesses of the coating layer, can be appropriately implemented within the ranges according to the present invention. In addition, capacity and lifespan characteristics of the positive electrode active material can be preferably implemented.

### 3. Positive Electrode and Lithium Secondary Battery

Still another embodiment of the present invention provides a positive electrode for a lithium secondary battery including the above-described positive electrode active material.

More specifically, the positive electrode may include a positive electrode current collector and a positive electrode active material layer disposed on the positive electrode current collector and including the above-described positive electrode active material.

The positive electrode current collector is not particularly limited as long as it has conductivity without causing a chemical change in the battery, and for example, stainless steel, aluminum, nickel, titanium, calcined carbon, or aluminum or stainless steel whose surface is surface-treated with carbon, nickel, titanium, silver, or the like may be used. In addition, the positive electrode current collector may typically have a thickness of 3 to 500 µm, and fine unevenness may be formed on the surface of the positive electrode current collector to increase adhesion of the positive electrode active material. For example, the positive electrode current collector may be used in various forms such as a film, a sheet, a foil, a net, a porous body, a foam, and a nonwoven fabric.

The positive electrode active material layer may include a binder and/or a conductive material together with the above-described positive electrode active material.

At this time, the binder serves to improve adhesion between positive electrode active material particles and adhesion between the positive electrode active material and the positive electrode current collector. Specific examples thereof may include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylenepropylene-diene monomer rubber (EPDM rubber), sulfonated EPDM, styrene butadiene rubber (SBR), fluororubber, or various copolymers thereof, and one alone or a mixture of two or more thereof may be used, but the binder is not limited thereto. The binder may be included in an amount of 1 to 30 wt% based on the total weight of the positive electrode active material layer.

In addition, the conductive material is used to impart conductivity to the electrode, and may be used without particular limitation as long as it has electron conductivity without causing a chemical change in the configured battery. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one alone or a mixture of two or more thereof may be used, but the conductive material is not limited thereto. The conductive material may typically be included in an amount of 1 to 30 wt% based on the total weight of the positive electrode active material layer.

The positive electrode may be manufactured according to a conventional positive electrode manufacturing method except that the above-described positive electrode active material is used.

Specifically, the positive electrode may be manufactured by applying a composition for forming a positive electrode active material layer, which includes the above-described positive electrode active material and optionally a binder, a conductive material, or a solvent as necessary, onto a positive electrode current collector, and then drying and rolling the same. At this time, the types and contents of the positive electrode active material, the binder, and the conductive material are as described above.

The solvent may be a solvent generally used in the art, and may include dimethyl sulfoxide (DMSO), isopropyl alcohol, N-methylpyrrolidone (NMP), acetone, water, or the like, and one alone or a mixture of two or more thereof may be used. The amount of the solvent used is sufficient as long as it can dissolve or disperse the positive electrode active material, the conductive material, and the binder in consideration of the coating thickness and manufacturing yield of the slurry, and allow a viscosity capable of exhibiting excellent thickness uniformity during subsequent coating for manufacturing the positive electrode.

In another method, the positive electrode may be manufactured by casting the composition for forming a positive electrode active material layer onto a separate support, and then laminating a film obtained by peeling the composition from the support onto a positive electrode current collector.

Still another embodiment of the present invention provides a lithium secondary battery including the above-described positive electrode for a lithium secondary battery.

More specifically, the lithium secondary battery may include a positive electrode, a negative electrode, a separator, and an electrolyte.

The lithium secondary battery may optionally further include a battery case accommodating an electrode assembly of the positive electrode, the negative electrode, and the separator, and a sealing member sealing the battery case.

The negative electrode may include a negative electrode current collector and a negative electrode active material layer positioned on the negative electrode current collector.

The negative electrode current collector is not particularly limited as long as it has high conductivity without causing a chemical change in the battery, and for example, copper, stainless steel, aluminum, nickel, titanium, calcined carbon, copper or stainless steel whose surface is surface-treated with carbon, nickel, titanium, silver, or the like, an aluminum-cadmium alloy, or the like may be used. In addition, the negative electrode current collector may typically have a thickness of 3 to 500 µm, and similarly to the positive electrode current collector, fine unevenness may be formed on the surface of the current collector to enhance bonding strength of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with a negative electrode active material. As one example, the negative electrode active material layer may be manufactured by applying and drying a composition for forming a negative electrode active material layer, which includes the negative electrode active material and optionally a binder and a conductive material, onto a negative electrode current collector, or may be manufactured by casting the composition for forming a negative electrode on a separate support and then laminating a film obtained by peeling the composition from the support onto a negative electrode current collector.

As the negative electrode active material, a compound capable of reversible intercalation and deintercalation of lithium may be used. Specific examples thereof may include carbonaceous materials such as artificial graphite, natural graphite, graphitized carbon fiber, and amorphous carbon; metallic compounds alloyable with lithium, such as Si, Al, Sn, Pb, Zn, Bi, In, Mg, Ga, Cd, Si alloys, Sn alloys, or Al alloys; metal oxides capable of doping and dedoping lithium, such as SiO_{β} (0<β<2), SnO₂, vanadium oxide, and lithium vanadium oxide; or composites including the metallic compound and the carbonaceous material, such as Si-C composites or Sn-C composites, and any one thereof or a mixture of two or more thereof may be used. In addition, a metal lithium thin film may also be used as the negative electrode active material. In addition, as the carbon material, both low-crystalline carbon and high-crystalline carbon may be used. Representative examples of the low-crystalline carbon include soft carbon and hard carbon. Representative examples of the high-crystalline carbon include amorphous, plate-shaped, flake-shaped, spherical, or fiber-type natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch-derived cokes.

The binder and the conductive material may be the same as those described above in the positive electrode.

The separator separates the negative electrode and the positive electrode and provides a movement path for lithium ions. Any separator generally used as a separator in a lithium secondary battery may be used without particular limitation, and in particular, a separator having low resistance to ion movement of the electrolyte and excellent ability to retain an electrolyte solution is preferable. Specifically, a porous polymer film, for example, a porous polymer film manufactured from a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. In addition, a conventional porous nonwoven fabric, for example, a nonwoven fabric formed of high-melting-point glass fibers, polyethylene terephthalate fibers, or the like, may also be used. In addition, a coated separator including a ceramic component or polymer material may be used to secure heat resistance or mechanical strength, and may optionally be used in a single-layer or multilayer structure.

Examples of the electrolyte may include an organic liquid electrolyte, an inorganic liquid electrolyte, a solid polymer electrolyte, a gel-type polymer electrolyte, a solid inorganic electrolyte, a molten inorganic electrolyte, and the like, which can be used for manufacturing a lithium secondary battery, but are not limited thereto.

Specifically, the organic liquid electrolyte may include an organic solvent and a lithium salt.

As the organic solvent, any organic solvent may be used without particular limitation as long as it can serve as a medium through which ions involved in an electrochemical reaction of the battery can move. Specifically, as the organic solvent, ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN, where R is a C2 to C20 linear, branched, or cyclic hydrocarbon group and may include a double-bond aromatic ring or ether bond; amides such as dimethylformamide; dioxolanes such as 1,3-dioxolane; or sulfolanes may be used. Among these, carbonate-based solvents are preferable, and a mixture of a cyclic carbonate having high ionic conductivity and high dielectric constant capable of improving charge and discharge performance of the battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain-type carbonate are mixed and used at a volume ratio of about 1:1 to about 1:9, the performance of the electrolyte solution can be excellent.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 to 2.0 M. When the concentration of the lithium salt is included in the above range, the electrolyte has appropriate conductivity and viscosity, and thus can exhibit excellent electrolyte performance, and lithium ions can move effectively.

In addition to the electrolyte components, the electrolyte may further include one or more additives, for example, a haloalkylene carbonate-based compound such as difluoroethylene carbonate, pyridine, triethyl phosphite, triethanolamine, cyclic ether, ethylenediamine, n-glyme, hexamethylphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, or the like, for the purpose of improving lifespan characteristics of the battery, suppressing a decrease in battery capacity, improving discharge capacity of the battery, and the like. At this time, the additive may be included in an amount of 0.1 to 5 wt% based on the total weight of the electrolyte.

As described above, since the lithium secondary battery including the positive electrode active material according to the present invention stably exhibits excellent discharge capacity, output characteristics, and capacity retention rate, it is useful in portable devices such as mobile phones, notebook computers, and digital cameras, and in the field of electric vehicles such as hybrid electric vehicles (HEVs).

Accordingly, still another embodiment of the present invention provides a battery module including the lithium secondary battery as a unit cell and a battery pack including the same.

The battery module or battery pack may be used as a power source of one or more medium-to-large-sized devices among power tools; electric vehicles (EVs), hybrid electric vehicles, and plug-in hybrid electric vehicles (PHEVs); or power storage systems.

Hereinafter, embodiments of the present invention will be described in more detail through Examples. However, the following Examples are merely preferred embodiments of the present invention, and the present invention is not limited by the following Examples.

### Example 1

### (1) Manufacture of Positive Electrode Active Material

(Preparation of Lithium Metal Oxide) A lithium metal oxide in the form of secondary particles having a composition of LiNi_{0.86}Co₀.₀₆Mn₀.₀₈O₂ was prepared.

At this time, after synthesis of the lithium metal oxide, a separate water-washing process was not performed.

(Coating) An atomic layer deposition reactor of a fluidized-bed type was used, and low-vacuum conditions were maintained so that the reaction temperature was 250°C and the pressure in the chamber was maintained at 1 to 10 torr. As a precursor, AlCl₃ was used as an aluminum-containing gas, P₂O₅ was used as a phosphorus-containing gas, and water (H₂O) was used as a reactant.

The prepared lithium metal oxide was introduced into the atomic layer deposition reactor, the aluminum-containing gas and the phosphorus-containing gas were injected together with N₂ gas so that the aluminum-containing gas and the phosphorus-containing gas were chemically adsorbed and saturated on the lithium metal oxide base material, and then H₂O was injected again to cause a chemical reaction, thereby forming a coating layer containing an aluminum compound. In addition, the input amount of AlCl₃ per one cycle was 1.0 wt% based on the total weight of the lithium metal oxide, the input amount of P₂O₅ per one cycle was 0.5 wt% based on the total weight of the lithium metal oxide, and the input amount of H₂O per one cycle was 0.005 wt% based on the total weight of the lithium metal oxide.

This series of processes was defined as one cycle, and a total of one cycle was performed.

### (2) Manufacture of Lithium Secondary Battery

A slurry for manufacturing an electrode plate was prepared by mixing the manufactured positive electrode active material:conductive material (carbon black, Denka black):binder (PVDF, KF1100) = 96.5:1.5:2 wt%, and the viscosity was adjusted by adding NMP (N-methyl-2-pyrrolidone) so that the solid content became about 30%. The manufactured slurry was coated on an Al foil having a thickness of 20 µm using a doctor blade, and then dried and rolled. The electrode loading amount was 15.4 mg/cm², and the rolling density (25°C, 20 kN) was 3.6 g/cm³.

As an electrolyte solution, 1 M LiPF₆ in EC:DMC:EMC = 3:4:3 (vol%) with VC added in an amount of 3.0 vol% based on the total amount of the electrolyte solution was used, and a coin cell was manufactured using a PP separator and a lithium negative electrode (200 µm, Honzo Metal).

### Example 2

A positive electrode active material and a lithium secondary battery were manufactured in the same manner as in Example 1, except that, in the coating step, the number of atomic layer deposition cycles was two cycles.

### Example 3

A positive electrode active material and a lithium secondary battery were manufactured in the same manner as in Example 1, except that, in the coating step, the number of atomic layer deposition cycles was three cycles.

### Comparative Example 1

A positive electrode active material and a lithium secondary battery were manufactured in the same manner as in Example 1, except that, after preparation of the lithium metal oxide, the coating process was not performed.

### Comparative Example 2

A positive electrode active material and a lithium secondary battery were manufactured in the same manner as in Example 1, except that, after preparation of the lithium metal oxide and before performing the coating process, a water-washing process using distilled water was performed.

### Comparative Example 3

A positive electrode active material and a lithium secondary battery were manufactured in the same manner as in Example 1, except that, in the coating step, the number of atomic layer deposition cycles was four cycles.

### Comparative Example 4

A positive electrode active material and a lithium secondary battery were manufactured in the same manner as in Example 1, except that, in the coating step, the atomic layer deposition reaction temperature was 150°C.

### Reference Example 1

A positive electrode active material and a lithium secondary battery were manufactured in the same manner as in Example 1, except that, in the coating step, the atomic layer deposition reaction temperature was 350°C.

Table 1 below summarizes process conditions of the Examples and Comparative Examples.

**[Table 1]**

| | AlCl₃ Input Amount per One Cycle Based on Total Weight of Lithium Metal Oxide (wt%) | P₂O₅ Input Amount per One Cycle Based on Total Weight of Lithium Metal Oxide (wt%) | H₂O Input Amount per One Cycle Based on Total Weight of Lithium Metal Oxide (wt%) | Whether Water-Washing Process Was Performed | Number of Atomic Layer Deposition Cycles | Atomic Layer Deposition Temperature (°C) |
|---|---|---|---|---|---|---|
| Comparative Example 1 | - | - | - | Not water-washed | - | - |
| Comparative Example 2 | 1 | 0.5 | 0.005 | Water-washed | 1 | 250 |
| Example 1 | 1 | 0.5 | 0.005 | Not water-washed | 1 | 250 |
| Example 2 | 1 | 0.5 | 0.005 | Not water-washed | 2 | 250 |
| Example 3 | 1 | 0.5 | 0.005 | Not water-washed | 3 | 250 |
| Comparative Example 3 | 1 | 0.5 | 0.005 | Not water-washed | 4 | 250 |
| Comparative Example 4 | 1 | 0.5 | 0.005 | Not water-washed | 1 | 150 |
| Reference Example 1 | 1 | 0.5 | 0.005 | Not water-washed | 1 | 350 |

Tables 2 and 3 below summarize evaluation results of physical properties of positive electrode active materials and electrochemical characteristics of lithium secondary batteries according to Experimental Examples 2 and 3, which will be described later.

**[Table 2]**

| | Average Thickness of Coating Layer (nm) | Average Difference Between Maximum Thickness and Minimum Thickness of Coating Layer (nm) | LiAlO₂/(AlPO₄+LiAlO₂) Weight Ratio (%) | Al Element Content (ppm) | P Element Content (ppm) | LiOH (ppm) | Li₂CO₃ (ppm) | Total (ppm) |
|---|---|---|---|---|---|---|---|---|
| Comparati ve Example 1 | - | - | - | N/A | N/A | 10,161 | 6,131 | 16,292 |
| Comparati ve Example 2 | 0.36 | 0.19 | 10.8 | 662 | 288 | 4,452 | 2,110 | 6,562 |
| Example 1 | 0.26 | 0.13 | 15.8 | 566 | 387 | 3,894 | 3,465 | 7,359 |
| Example 2 | 0.69 | 0.15 | 22.5 | 1,311 | 498 | 3,514 | 2,997 | 6,511 |
| Example 3 | 0.87 | 0.25 | 26.8 | 2,055 | 895 | 3,002 | 1,985 | 4,987 |
| Comparati ve Example 3 | 1.55 | 0.69 | 33.9 | 2,230 | 1,185 | 2,855 | 1,587 | 4,442 |
| Comparati ve Example 4 | 0.1 | 0.05 | 5.6 | 698 | 488 | 6,225 | 5,430 | 11,655 |
| Reference Example 1 | 0.53 | 0.23 | 20.5 | 785 | 235 | 4,110 | 3,075 | 7,185 |

**[Table 3]**

| | Initial Charge Capacity (mAh/g) | Initial Discharge Capacity (mAh/g) | Initial Efficiency (%) | High-Temperature Capacity Retention Rate (45°C, 30 cycles, %) |
|---|---|---|---|---|
| Comparative Example 1 | 220.5 | 193 | 87.53 | 91.3 |
| Comparative Example 2 | 222.6 | 192 | 86.25 | 91.6 |
| Example 1 | 220.5 | 193.3 | 87.66 | 93.6 |
| Example 2 | 220.7 | 193.2 | 87.54 | 92.6 |
| Example 3 | 221.8 | 192.4 | 86.47 | 92 |
| Comparative Example 3 | 219.5 | 190.5 | 86.79 | 90.6 |
| Comparative Example 4 | 220.1 | 192.8 | 87.60 | 91.2 |
| Reference Example 1 | 217.1 | 188.5 | 86.83 | 89.6 |

### Experimental Example 1: Analysis of Coating Layer of Positive Electrode Active Material

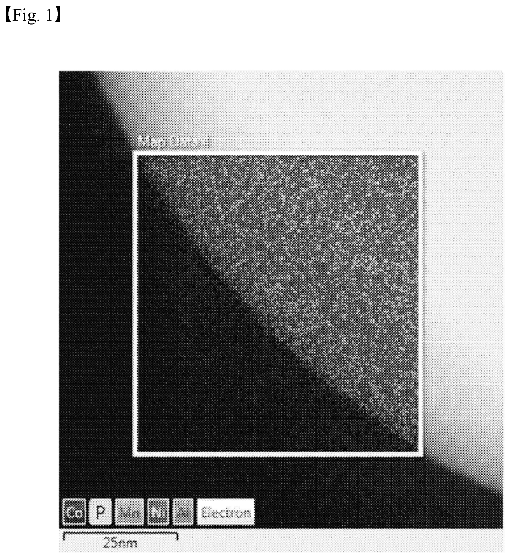

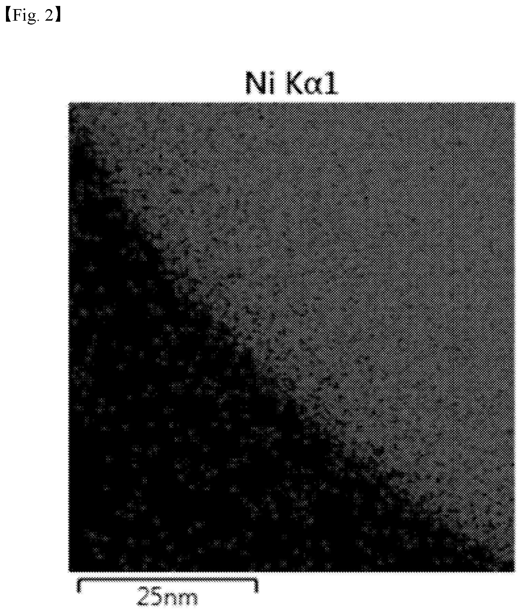

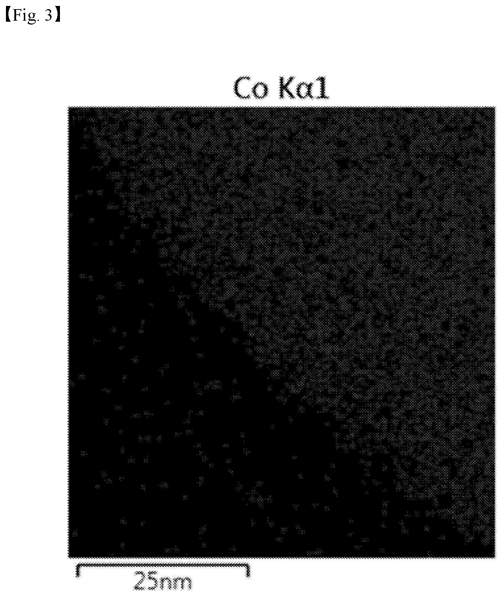

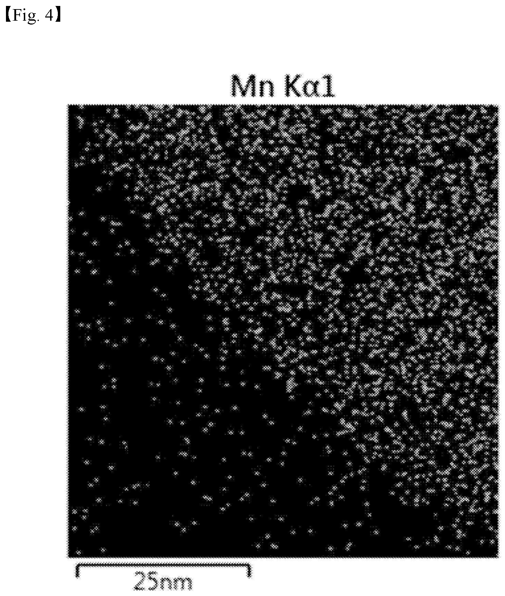

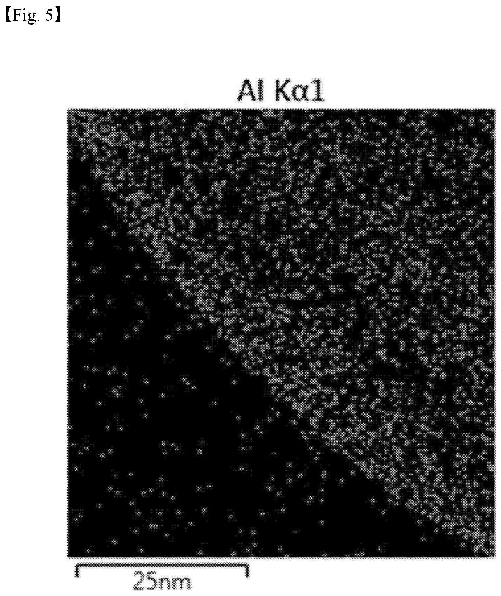

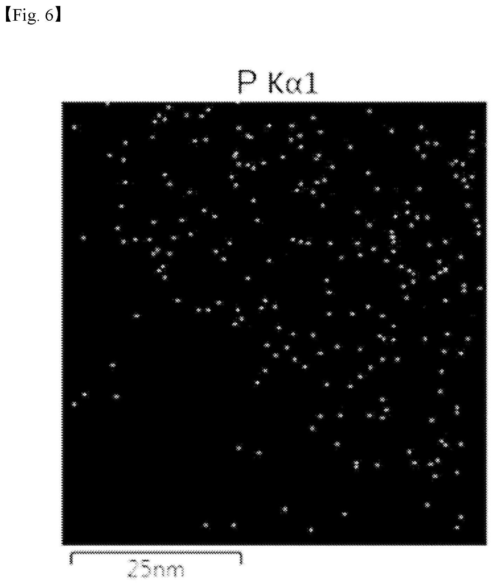

FIG. 1 is an EDS (Energy Dispersive Spectroscopy) mapping image for a TEM image of a particle surface after FIB (Focused Ion Beam) milling of a positive electrode active material manufactured according to Example 2. FIG. 2 is an EDS (Energy Dispersive Spectroscopy) mapping image for a nickel element in FIG. 1. FIG. 3 is an EDS (Energy Dispersive Spectroscopy) mapping image for a cobalt element in FIG. 1. FIG. 4 is an EDS (Energy Dispersive Spectroscopy) mapping image for a manganese element in FIG. 1. FIG. 5 is an EDS (Energy Dispersive Spectroscopy) mapping image for an aluminum element in FIG. 1. FIG. 6 is an EDS (Energy Dispersive Spectroscopy) mapping image for a phosphorus element in FIG. 1.

Referring to FIGS. 1 to 6, it was confirmed that, in the positive electrode active material of Example 2, an aluminum coating layer was coated in a very thin and uniform conformal type on the entire surface of secondary particles.

### Experimental Example 2: Evaluation of Physical Properties of Positive Electrode Active Material

### (1) Evaluation of Average Thickness of Coating Layer

First, the thickness of the coating layer for one positive electrode active material particle was calculated by analyzing a cross-sectional TEM image after FIB (Focused Ion Beam) milling of the positive electrode active material particle, randomly selecting 10 positions among the surface portions of the positive electrode active material particle, and obtaining an average value of the coating layer thicknesses at the selected positions. Next, the average thickness of the coating layer was calculated by obtaining an average of coating layer thicknesses measured in the same manner as described above for 20 arbitrary positive electrode active material particles among the positive electrode active material powder.

### (2) Evaluation of Average of Difference Values Between Maximum Thicknesses and Minimum Thicknesses of Coating Layer

First, the difference value between the maximum thickness and the minimum thickness for one positive electrode active material particle was calculated by analyzing a cross-sectional TEM image after FIB (Focused Ion Beam) milling of the positive electrode active material particle, calculating the maximum thickness and the minimum thickness among the entire coating layer surrounding the active material particle, and obtaining a difference value therebetween. Next, the average of the difference values between maximum thicknesses and minimum thicknesses of the coating layer was calculated by obtaining an average of coating layer thicknesses measured in the same manner as described above for 20 arbitrary positive electrode active material particles among the positive electrode active material powder.

### (3) Evaluation of Weight Ratio of LiAlO₂ Relative to Total Weight of LiAlO₂ and AlPO₄ in Coating Layer

The weight ratio of LiAlO₂ relative to the total weight of LiAlO₂ and AlPO₄ in the coating layer was evaluated through X-ray Photoelectron Spectroscopy (XPS) analysis of the surface of the positive electrode active material.

### (4) Evaluation of Al and P Element Contents in Positive Electrode Active Material

The contents of Al and P elements in the positive electrode active material based on the total weight of the positive electrode active material were evaluated through ICP (inductively coupled plasma spectroscopy) component analysis.

### (5) Evaluation of Residual Lithium Content

After distilled water was added to the positive electrode active material, residual lithium was extracted using a stirrer, and then the positive electrode active material powder and an extract were separated using a filtering device. Thereafter, the extract was measured through neutralization titration using a Metrohm potentiometric titrator to evaluate residual lithium.

### Experimental Example 3: Evaluation of Electrochemical Characteristics of Lithium Secondary Battery

### (1) Evaluation of Initial Capacity and Initial Efficiency

After a lithium secondary battery half-cell was manufactured and aged at 25°C for 12 hours, a charge and discharge test was performed at 25°C. For initial capacity evaluation, charging was performed with a constant current of 0.1 C up to 4.25 V based on a reference capacity of 200 mAh/g, then switched to a constant voltage, and charging was performed until the termination current reached 0.05 C. After a rest time of 10 minutes after charging, discharging was performed with a constant current of 0.1 C based on a reference capacity of 200 mAh/g until the voltage reached 2.5 V.

### (2) Evaluation of High-Temperature Capacity Retention Rate (45°C, 30 cycles)

After a lithium secondary battery half-cell was manufactured, charging was performed at 45°C with a constant current of 0.33 C up to 4.25 V, then switched to a constant voltage, and charging was performed until the termination current reached 0.05 C. After a rest time of 10 minutes after charging, discharging was performed with a constant current of 0.33 C until the voltage reached 2.5 V. Charging and discharging were performed 30 times under the above charge/discharge cycle conditions, and at this time, the capacity retention rate of the 30th cycle relative to the first cycle was calculated.

Referring to Tables 1 to 3, it was confirmed that, in the case of Examples 1 to 3, in which a water-washing process was not performed and overall coating process conditions, such as aluminum coating by an atomic layer deposition process, the number of cycles performed in the atomic layer deposition process, the input amounts of an aluminum-containing gas, a phosphorus-containing gas, and a reactant relative to the lithium metal oxide when one cycle is performed, and the atomic layer deposition temperature, were controlled, the weight ratio of LiAlO₂ relative to the total weight of LiAlO₂ and AlPO₄ in the coating layer, the average thickness of the coating layer, and other overall physical properties were obtained within the ranges according to the present invention. In addition, it was confirmed that the residual lithium content was reduced compared with Comparative Example 1, which was the lithium metal oxide base material, and lifespan characteristics of the battery, that is, the high-temperature capacity retention rate, were improved while capacity characteristics, that is, initial discharge capacity, were excellently implemented.

In contrast, in the case of Comparative Example 1, which was the lithium metal oxide base material, it was confirmed that the residual lithium content was too high and lifespan characteristics of the battery were poor compared with the Examples.

In the case of Comparative Example 2, as a result of performing the water-washing process, it was confirmed that the weight ratio of LiAlO₂ relative to the total weight of LiAlO₂ and AlPO₄ in the coating layer was outside the range according to the present invention, and the content of the P element was detected to be small, so that the coating yield was reduced. In addition, it was confirmed that the capacity and lifespan characteristics of the battery were lower than those of the Examples.

In the case of Comparative Example 3, as a result of the number of atomic layer deposition cycles being too large, it was confirmed that the weight ratio of LiAlO₂ relative to the total weight of LiAlO₂ and AlPO₄ in the coating layer, the average thickness of the coating layer, the average difference between maximum thickness and minimum thickness of the coating layer, and the contents of Al and P elements were outside the ranges according to the present invention. In addition, although the residual lithium reduction effect was favorable, it was confirmed that capacity and lifespan characteristics of the battery were lower than those of the Examples.

In the case of Comparative Example 4, as a result of the atomic layer deposition temperature being too low, it was confirmed that the coating layer forming reaction did not smoothly occur, and the weight ratio of LiAlO₂ relative to the total weight of LiAlO₂ and AlPO₄ in the coating layer and the average thickness of the coating layer were outside the ranges according to the present invention, and it was confirmed that the residual lithium reduction effect was very poor. In addition, it was confirmed that lifespan characteristics of the battery were lower than those of the Examples.

In the case of Reference Example 1, as a result of the atomic layer deposition temperature being too high, it was confirmed that the content of the P element was detected to be small, so that the coating yield was reduced. In addition, it was confirmed that capacity and lifespan characteristics of the battery were lower than those of the Examples.

Although preferred embodiments of the present invention have been described above, the present invention is not limited thereto, and various modifications may be made and practiced within the scope of the claims, the detailed description of the invention, and the accompanying drawings, and it is obvious that these also fall within the scope of the present invention.

Accordingly, the substantial scope of rights of the present invention should be defined by the appended claims and equivalents thereof.

## Claims

1. A positive electrode active material for a lithium secondary battery, comprising:
lithium metal oxide particles having a nickel (Ni)-containing layered crystal structure; and
a coating layer surrounding an entire surface of the lithium metal oxide particles and containing an aluminum (Al) compound,
wherein the aluminum compound includes LiAlO₂ and AlPO₄, and
wherein a content of LiAlO₂ is 13 to 31 wt% based on a total weight of LiAlO₂ and AlPO₄.

2. The positive electrode active material for a lithium secondary battery of claim 1,
wherein the coating layer has an average thickness of 0.15 to 1.3 nm.

3. The positive electrode active material for a lithium secondary battery of claim 1,
wherein an average of difference values between a maximum thickness and a minimum thickness of the coating layer is 0.5 nm or less.

4. The positive electrode active material for a lithium secondary battery of claim 1,
wherein a content of an aluminum element in the positive electrode active material is 400 to 2150 ppm based on a total weight of the positive electrode active material.

5. The positive electrode active material for a lithium secondary battery of claim 1,
wherein a content of a phosphorus element in the positive electrode active material is 300 to 1000 ppm based on a total weight of the positive electrode active material.

6. The positive electrode active material for a lithium secondary battery of claim 1,
wherein the LiAlO₂ is amorphous.

7. The positive electrode active material for a lithium secondary battery of claim 1,
wherein the AlPO₄ is amorphous.

8. The positive electrode active material for a lithium secondary battery of claim 1,
wherein the positive electrode active material has a residual lithium content of 8000 ppm or less.

9. The positive electrode active material for a lithium secondary battery of claim 1,
wherein a content of nickel in the lithium metal oxide is 80 mol% or more based on a total number of moles of metals excluding lithium.

10. The positive electrode active material for a lithium secondary battery of claim 1,
wherein the lithium metal oxide is represented by the following Chemical Formula 1:
[Chemical Formula 1] Liₐ[NiₓCo_{y}Mn_{z}M_{w}]O₂
wherein, in Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

11. A method for manufacturing a positive electrode active material for a lithium secondary battery, comprising:
preparing a lithium metal oxide having a nickel (Ni)-containing layered crystal structure;
and
forming a coating layer containing an aluminum compound on the lithium metal oxide by an atomic layer deposition method,
wherein a water-washing process is not performed after the preparing of the lithium metal oxide and before the forming of the coating layer, and
wherein the aluminum compound includes LiAlO₂ and AlPO₄, and a content of LiAlO₂ is 13 to 31 wt% based on a total weight of LiAlO₂ and AlPO₄.

12. The method for manufacturing a positive electrode active material for a lithium secondary battery of claim 11,
wherein the atomic layer deposition is performed in 1 to 3 cycles.

13. The method for manufacturing a positive electrode active material for a lithium secondary battery of claim 11,
wherein one cycle of the atomic layer deposition comprises:
supplying an aluminum-containing gas and a phosphorus-containing gas onto the lithium metal oxide to adsorb the aluminum-containing gas and the phosphorus-containing gas onto the lithium metal oxide; and
supplying and reacting a reactant onto the lithium metal oxide onto which the aluminum-containing gas and the phosphorus-containing gas are adsorbed.

14. The method for manufacturing a positive electrode active material for a lithium secondary battery of claim 13,
wherein a supply amount of the aluminum-containing gas is 0.2 to 2.0 wt% based on a total weight of the lithium metal oxide.

15. The method for manufacturing a positive electrode active material for a lithium secondary battery of claim 13,
wherein a supply amount of the phosphorus-containing gas is 0.2 to 1.6 wt% based on a total weight of the lithium metal oxide.

16. The method for manufacturing a positive electrode active material for a lithium secondary battery of claim 13,
wherein a supply amount of the reactant is 0.002 to 0.02 wt% based on a total weight of the lithium metal oxide.

17. The method for manufacturing a positive electrode active material for a lithium secondary battery of claim 11,
wherein the atomic layer deposition is performed at a temperature of 200 to 300°C.

18. The method for manufacturing a positive electrode active material for a lithium secondary battery of claim 11,
wherein the atomic layer deposition is performed at a pressure of 1 to 10 torr.

19. A positive electrode for a lithium secondary battery comprising the positive electrode active material of claim 1.

20. A lithium secondary battery comprising the positive electrode for a lithium secondary battery of claim 19.
